# EUROPEAN PATENT SPECIFICATION

(11) **EP 1 743 525 B1**
(45) Date of publication and mention of the grant of the patent: **01.01.2014**
(21) Application number: 05425511.2
(22) Date of filing: 14.07.2005
(51) Int. Cl.: F16H 3/30, A01M 7/00

(54) **Atomizer with facilitated coupling**
Zerstäuber mit vereinfachter Kopplung
Pulvérisateur à couplage facilité

(43) Date of publication of application: 17.01.2007
(73) Proprietor: B.I.M.A. Srl, 42100 Reggio Emilia (IT)
(72) Inventor: Boschi, Daniele, 42100 Reggio Emilia (IT)
(74) Representative: Gotra, Stefano

(56) References cited:
- DE-B- 1 286 912
- FR-A- 2 770 741
- GB-A- 844 318

## Description

The invention is usefully applied in the field of agriculture, for treating plantations via atomising of chemical products in water solution.

Atomisers present on the market are divided into two categories: held atomisers, i.e. moved directly by an operator; and drawn atomisers, i.e. moved by a land vehicle such as a tractor.

Each atomiser is defined by a tank, containing a chemical substance, preferably in a water solution, for treatment of crops.

The tank exhibits a conduit connected to a pump, through which the chemical substance is circulated under pressure; the pump is hydraulically connected to a plurality of nozzles for spraying the solution.

In order to improve dispersion of the product, the plurality of nozzles is arranged on the periphery of a turbine which enables regular dispersion of the product atomised by the nozzles.

From a mechanical point of view the atomiser comprises a shaft, powered by a motor when the atomiser is connected either to a power take-off if the atomiser is a trailer drawn by, for example, a tractor, which shaft turns the pump, or connected via a universal joint to an overgear which is externally controlled by a rotary motion group turned by the turbine.

According to the type of crop to be treated, or the type of chemical substance to be sprayed, or even in line with the height of the plants to be treated, prior-art atomisers internally exhibit a gear change integrated with the overgear so that the turbine speed can be regulated, and consequently the degree of dispersion of the atomised chemical substance can be controlled.

The atomisers summarised above exhibit an operative drawback linked to the difficulty of engaging the gears on the overgear.

For example, in the case of a drawn atomiser, the user drives a tractor and at the same time powers the atomiser through a power take-off.

When the turbine rotation speed is to be changed, it is necessary to intervene directly on the overgear, which means leaving the tractor cockpit.

To insert the desired gear, a lever external of the overgear has to be operated.

During this operation a crown gear, mounted on the input shaft, enmeshes with a pinion mounted on the output shaft, i.e. the cogs of the crown insert between those of the pinion.

If, however, the crown gears clash against those of the pinion, the gear cannot be engaged.

When this happens, the driven shaft has to be slightly rotated, as consequently does the overgear input shaft, in order to change the position of the crown with respect to the pinion, to enable engagement of the desired gear.

By putting the tractor gear change into idle this rotation of the driven shaft can be done manually to obtain the desired result.

The above operation, however, is not always practicable.

If the tractor is on hilly terrain, there is the risk that by putting it into idle it might move forwards or backwards, an undesirable eventuality.

In order to avoid such an occurrence, the tractor must be left in gear and the operator, not being able to work manually on the power take-off because of the high torque needed to rotate it, has no option but to return into the cockpit and activate the motor to achieve the small rotation of the drive shaft. Thereafter the operator has to jump down again from the cockpit to see if the gear can now be engaged. If not, the above operation will have to be repeated - a very time-consuming operation.

Tired of jumping up and down from the cockpit, the operator may resort to forcing gear engagement with the motor on, leading to potential wear on the overgear wheels and indeed possible breakage of the whole transmission.

Alternatively, two operators may be employed, one to drive the tractor and the other to control the overgear. This is obviously uneconomic, needing two operators, but is also absolutely inadvisable due to risk of injury. Should the first operator, driving the tractor, and the second, in charge of the overgear, misinterpret each other's signals, the first operator might engage the motor when the second still has his hands on the power take-off, which could lead to very serious injury to limbs.

An atomiser according to the above description is disclosed in FR 2770741. The atomiser comprises an overgear which has a lever for varying the transmission ratio of the overgear by moving axially one gear wth respect to the other, and means for assisting the variation of the transmission ratio. The means for assisting the transmission ratio comprises an elastic member mounted on a slider which is moved by the operator against a wheel that is mounted fixed on the input or output shaft of the overgear, so that the movement of the slider sets in a slow rotation the wheel which in turn moves one gear with respect to the other, so aiding the engagement between the gears. During all the operation of the operator on the slider, the operator also has to hold the lever for holding one gear pushed against the other.

The main aim of the device of the invention is to provide an atomiser with facilitated engagement which enables a gear to be engaged without intervening on the driven shaft of the atomiser.

A second aim of the invention is to provide an atomiser with facilitated engagement which enables a "soft" engagement of the selected gear, thus obviating the wear phenomena existing in the prior art connected with the gear changing operations.

A further aim of the invention is to provide an atomiser with facilitated engagement which enables a preselected gear to be engaged in a single operation performed by a single operator.

These aims and advantages and more besides are all attained by the invention, as it is defined in claim 1.

The invention will now be described in detail with reference to the figures of the appended drawings, which illustrate three non-limiting preferred embodiments thereof, and in which:

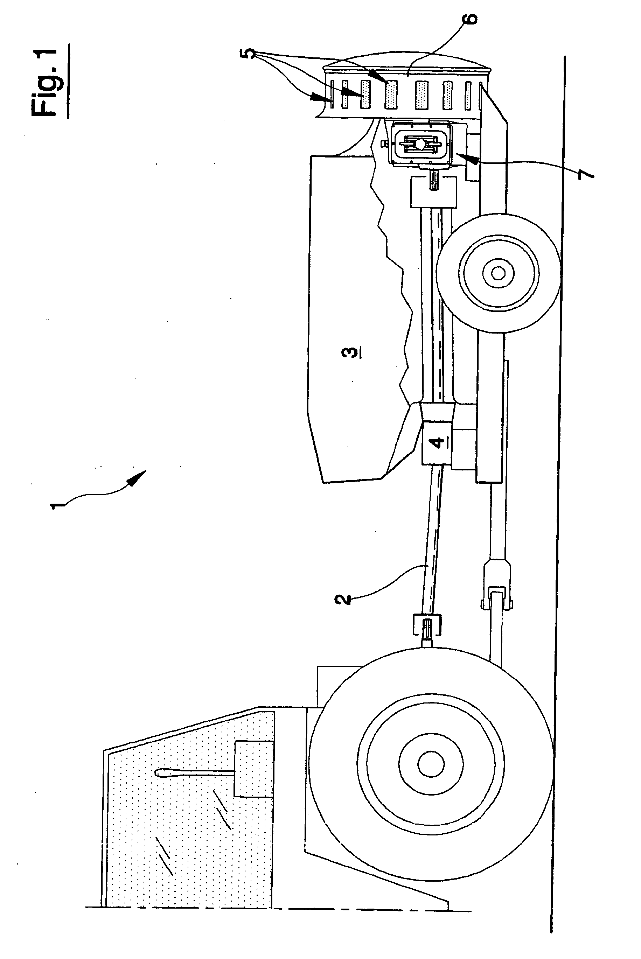

Figure 1 is a schematic view of the connection between an atomiser with facilitated engagement, object of the present application, and a land vehicle drawing the atomiser, in the figure a tractor;
Figure 2 is a side view of a median section of an overgear of a type having two parallel axes, which is an integral part of the atomiser with facilitated engagement, in a first embodiment;
Figure 3 is a side view of a median section of an overgear of a type having two parallel axes, which is an integral part of the atomiser with facilitated engagement, in a second embodiment;
Figure 4 is a projection of first means for engaging, applied on the overgear and shown in a start-cycle position;
Figure 5 is a projection of first means for engaging, applied on the overgear and shown in an end-cycle position;
Figure 6 is a projection of second means for engaging, applied on the overgear and shown in a start-cycle position;
Figure 7 is a projection of second means for engaging, applied on the overgear and shown in an end-cycle position;
Figure 8 is a projection of third means for engaging, applied on the overgear and shown in a start-cycle position;
Figure 9 is a projection of third means for engaging, applied on the overgear and shown in an end-cycle position.

With reference to the figures of the drawings, 1 denotes in its entirety an atomiser with facilitated engagement, object of the present invention.

The atomiser 1 superiorly exhibits a tank 3 containing a chemical substance for treatment of plants, and inferiorly exhibits a mechanical transmission.

The mechanical transmission comprises a driven shaft 2, powered by a motor or by a power take-off, connected to and turning a pump 4 which circulates the chemical substance at pressure, which chemical substance is in communication with a plurality of nozzles 5 dispensing the chemical substance externally of the atomiser 1.

The driven shaft 2 is mechanically connected to an overgear 7 which in turn is mechanically connected to a turbine 6 of known type and having the function of atomising the chemical substance exiting from the plurality of nozzles 5.

To facilitate atomisation of the plurality of nozzles 5 a dial is arranged peripherally of the turbine 6.

The overgear 7 internally comprises a plurality of gears 9 defining a gear change providing six speeds to the turbine.

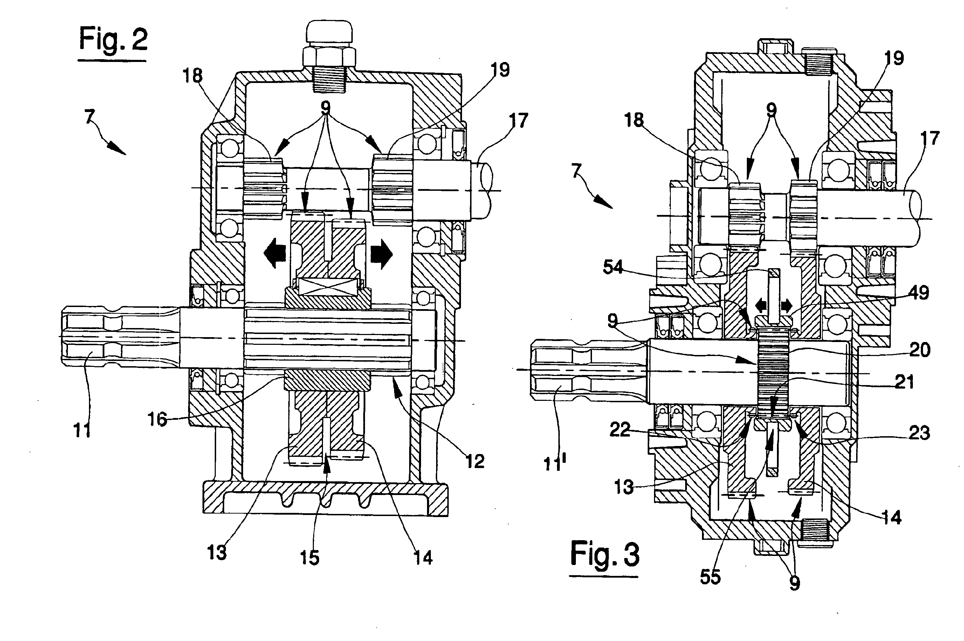

The overgear 7, illustrated in figures 2 and 3, has two parallel axes and exhibits an input shaft 11 and an output shaft 17 in mechanical transmission with the input shaft 11.

The input shaft 11, receiving drive from the driven shaft 2, exhibits a first crown gear 13 and a second crown gear 14, solidly constrained to one another and contiguous.

The output shaft 17 exhibits a first pinion 18 and a second pinion 19 which can be respectively connected to the first crown gear 13 and the second crown gear 14.

In a first embodiment of the invention, illustrated in figure 2, the overgear 7 exhibits a first input shaft 11 exhibiting a splined surface 12 on which a bush 16 is keyed, slidably axially on the splined surface 12, on which the first crown gear 13 and the second crown gear 14 are mounted, separated one from another by a chamber 15.

In a second embodiment of the invention, illustrated in figure 3, the overgear 7 exhibits a second input shaft 11' exhibiting an increase in section 20; on a periphery thereof a cogging 21 is afforded, joined to an internal gear 49.

The internal gear 49 is annular and exhibits on an external periphery thereof a circular channel 55 extending along the external diameter of the internal gear 49.

Still with reference to the embodiment of figure 3, the first crown gear 13 exhibits a first cogwheel 22 solidly constrained thereto and terminating in an abutment on the increase in section 20.

Similarly the second crown gear 14 exhibits a second cogwheel 23 solidly constrained thereto and terminating in abutment on the increase in section 20.

The first crown gear 13 and the second crown gear 14 are, in this configuration, always connected to their pinions and are rotatingly idle on the second shaft 11', and the first cogwheel 22 and the second cogwheel 23 exhibit an external diameter and step which are equal to those of the first cogging 21.

Means for engaging 8 are present in the overgear 7 for enacting a pre-engagement of gears caused by an axial nearing of a gear to a reciprocal gear, each belonging to the plurality of gears 9.

The means for selecting 8 cooperate with elastic means 10 which can generate a thrust for enabling an automatic engaging, defined by the joining of a gear with a reciprocal gear, each belonging to the plurality of gears 9, actuated with no further intervention on the part of an external operator.

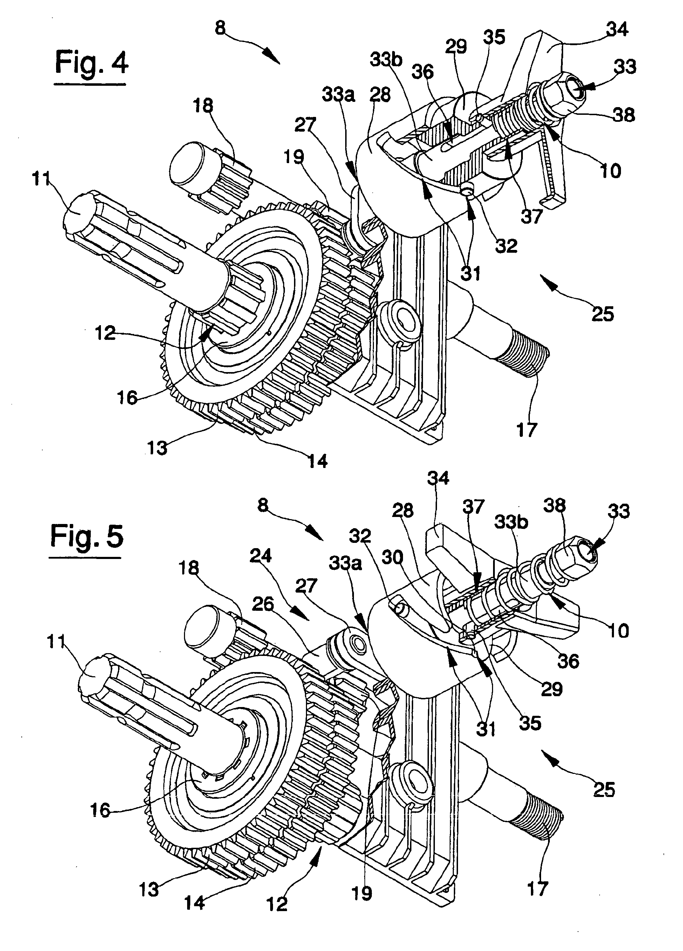

In a first embodiment, illustrated in figures 4 and 5, and adaptable to the overgear 7 provided with the first input shaft 11, the means for engaging 8 are defined by a first group 24 having rotary motion and a second group 25 having helical motion.

The first group 24, operating internally of the overgear 7, includes a skate 26 located in the chamber 15 and connected to a lever arm 27.

The second group 25, operating externally of the overgear 7, includes a tumbler-shaped body 28 internally of which an intermediate body 29 translates in helical motion.

The helical motion is obtained by an interaction of a seating 30 and a pair of slots 31, the slots 31, with helical development, being arranged specularly with respect to the seating 30 and being afforded on the side wall of the tumbler-shaped body 28, with a pin 32 formed on the peripheral edge of the intermediate body 29.

The first group 24 is in transmission with the second group 25 via a pivot 33 terminating upstream of the second group 25 with a handle 34.

In the preferred embodiment the pin 33 is connected, by a first portion 33a thereof immersed in the overgear 7, to the lever arm 27 opposite the skate 26, and by a second portion 33b, projecting from the overgear 7, to the tumbler-shaped body 28, the intermediate body 29, the handle 34 and the elastic means 10.

Further, the second portion 33b is concentric with the tumbler-shaped body 28, the intermediate body 29, the handle 34 and the elastic means 10.

More precisely the intermediate body 29 is connected to the pivot 33 through a mobile pin 35, following the action of the elastic means 10, on a slot 36 afforded on the axis of the pivot 33.

Superiorly of the pin 35, the intermediate body 29 exhibits a tubular projection 37 which is couplable to the handle 34.

The tubular projection 37 houses the elastic means 10, which cross the handle 34 and strike on a fastening nut 38 screwed on the pivot 33.

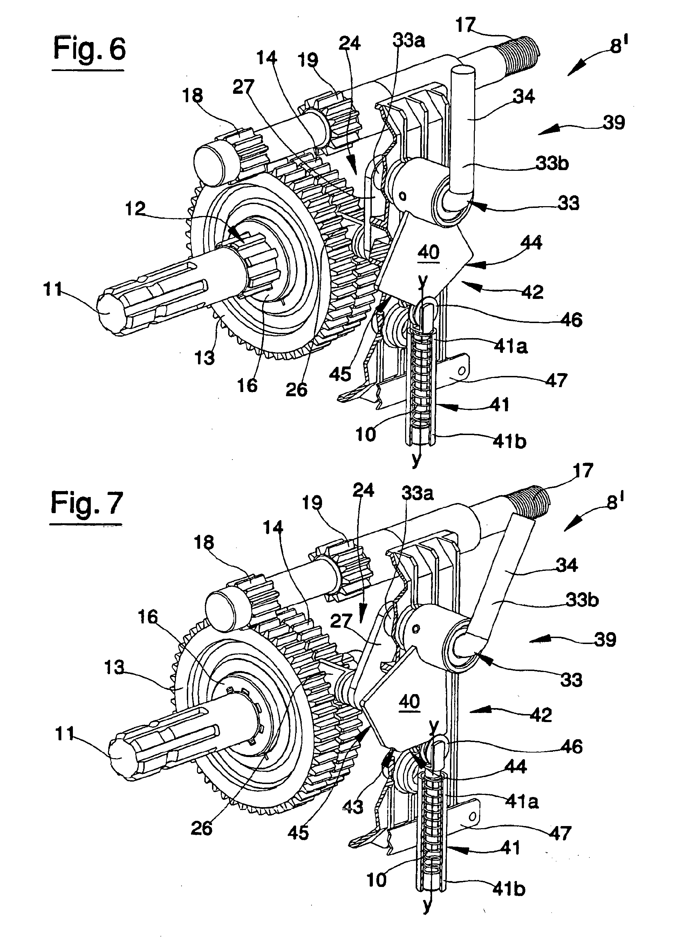

In this configuration, i.e. with the overgear 7 integrated with the first input shaft 11, the means for engaging 8 illustrated in figures 6 and 7 are defined by the first rotary group 24 and a second axially-moving group 39, preferably moving in an opposite direction to the tangential component of the rotary motion.

Externally of the overgear 7 the second group 39 exhibits a cam 40 and a small piston 41.

The cam 40 exhibits a rolling element 42 provided with a central recess 43 from which a first linear tract 44 and a second linear tract 45 branch out, preferably in opposite directions; the second linear tract 45 is symmetrical to the first linear tract 44.

The small piston 41, axially mobile along a vertical axis Y-Y, exhibits at a first end 41a thereof a wheel 46, striking on the rolling element 42 of the cam 40, and a second end 41b thereof an anchoring bracket 47 for connecting the piston 41 to the overgear 7.

The transmission between the first group 24 and the second group 39 is obtained by a pin 33 connected, by a first portion 33a thereof, immersed in the overgear 7, to the lever arm 27, and by a second portion 33b, projecting from the overgear 7, solid in rotation with the cam 40 and terminating with a handle 34.

The elastic means 10 act on the piston 41 to generate a thrust on the wheel 46 in the direction of the axis Y-Y.

The elastic thrust is transmitted by the wheel 46 to the rolling element 42 and produces a corresponding rotation torque on the pivot 33 to which the cam 24 is connected.

In a further configuration, illustrated in figures 3, 8 and 9, with the overgear 7 provided with the second input shaft 11', the means for engaging 8" are defined by a second group 48 which is axially-mobile in relation to the axis of the second input shaft 11' and which collaborates with the internal gear 49 connected to the first cogging 21 afforded on the increased section 20.

The second group 48 exhibits a rod 50, parallel to the second input shaft 11', a fork 51 and a body 52 which is axially slidable along the rod 50.

The fork 51 is defined by a pair of shoulders 53, anchored to the rod 50 and internally of which the body 52 skates, from which an arm 54 inferiorly develops, which arm 54 terminates in a coupling on the slot 55 afforded on the external periphery of the internal gear 49.

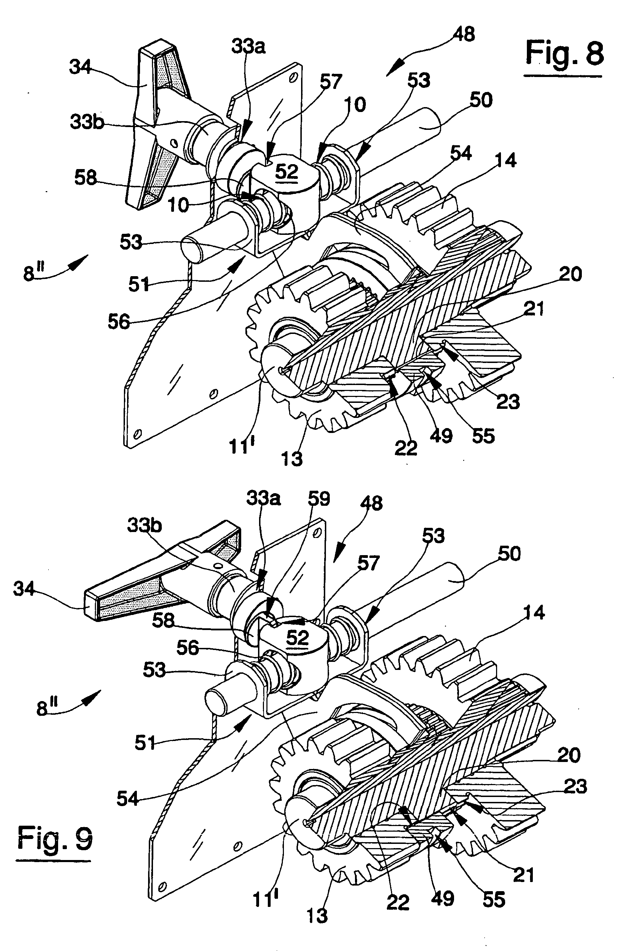

As can be seen in figures 8 and 9, the internal gear 49 exhibits on the external periphery thereof a slot 55 on which the C-shaped arm 54 partially winds.

The body 52, slidable on the rod 50 through a through-hole 56 made in the rod 50, exhibits a recess 57 located opposite to the side facing the internal gear 49.

In this configuration of the means for engaging 8", the elastic means are doubled, each exhibiting an end that strikes on one of the pair of shoulders 53, while the opposite end strikes on a respective side of the body 52.

In this case too the transmission between the second group 48 and the internal gear 49 is via the pivot 33 terminating externally of the overgear 7 with a handle 34 and internally thereof with a pad 58, which pad 58 is eccentric of the axis of the pivot 33 and is provided with a projection 59 which can abut on the recess 57.

There now follows a description of the functioning of the atomiser 1 with the overgear 7 having the first input shaft 11, means for engaging 8 and elastic means 10.

In the start cycle position, illustrated in figure 4, the means for engaging 8 have the pin 32 in striking position on the seating 30 of the tumbler-shaped body 28.

The intermediate body 29 is distanced from the bottom of the tumbler-shaped body 28 and the elastic means 10 are compressed between the fastening nut 38 and the bottom of the tubular projection 37.

In this configuration the first input shaft 11, not having a crown gear 13, 14 connected with a respective pinion 18, 19 rotates idle, transmitting no speed to the output shaft 17, which is still.

By performing a small rotation on the handle 34, a respective rotation is invoked on the pivot 33.

The skate 26 rolls around the pivot 33 axis, thanks to the lever arm 27, causing an axial displacement of the first crown 13, or the second crown 14 according to the rotation direction of the handle 34, which translates and nears the first pinion 18, or the second pinion 19 according to the rotation direction of the handle 34.

At the same time the rotation of the pivot 33 causes a corresponding rotation of the intermediate body 29, solidly constrained to the pivot 33 through the pin 35 so as to enable disengagement of the pin 32 from the seating 30.

During this transition, the elastic means 10 are freed in order to exert an axial thrust on the intermediate body 29 in order to bring it to strike on the bottom of the tumbler-shaped body 28.

The movement of the intermediate body 29 includes an axial component, generated by elastic means 10, and a rotational component, due to the translation of the pin 32 on one of the pairs of slots 31.

The resultant of the components produces a helical movement of the intermediate body 29.

The intermediate body 29, thanks to the presence of the pin 34-slot 36 coupling, transmits only rotation to the pivot 33, and consequently to the lever arm 27.

The skate 24, solidly constrained to the lever arm 27, exerts a thrust on the first crown gear 13 which causes contact between the first crown gear 13 and the first pinion 18.

This leads the means for engaging to the end-cycle position, illustrated in figure 5. This condition is reached when the pin 32 is at the bottom of one of the pair of slots 31 and the intermediate body 29 is consequently in striking position on the bottom of the tumbler-shaped body 28.

If there is a correspondence between the cog of the first crown gear 13 and the gulley between cogs of the first pinion 18, the gears are immediately enmeshed.

If this is not the case, the elastic thrust of the means for engaging 10 prevents the return of the lever arm 27, causing contact between the first crown gear 13 and the first pinion 18 without however engaging the gears.

As soon as the driven shaft 2 receives drive from the power take-off there will be a relative rotation of the first input shaft 11 and consequently of the first crown gear 13 and, at the same time, an immediate enmeshing of the first crown gear 13 on the first pinion 18.

The functioning of the atomiser 1 provided with the overgear 7, having the first input shaft 11, of the means for engaging 8' and the elastic means 10 is as follows.

The means for engaging 8' are in the start-cycle position when the wheel 46 is inserted in the recess 43 made on the cam 40, figure 6.

With a small rotation of the handle 34 a respective rotation of the pivot 33 is induced.

The skate 24 rotates about the pivot axis 33 thanks to the lever arm 27, causing an axial displacement of the first crown gear 13, or the second crown gear 14 according to the rotation direction of the handle 34, which translates towards the first pinion 18, or the second pinion 19 according to the rotation direction of the handle 34.

At the same time the rotation of the pivot 33 causes a corresponding rotation of the cam 40 such as to enable disengagement of the wheel 46 from the central recess 43.

During this transition the elastic means 10 are freed to exert an increasing thrust, in a direction along the axis Y-Y, on the wheel 46, such as to cause the wheel 46 to roll on the first linear tract 44, or on the second linear tract 45, according to the rotation direction of the handle 34.

The rolling of the wheel 46, fixed to the overgear 7, thanks to the presence of the anchoring bracket 47, leads to a rotation of the cam 40 which is directly transmitted to the pivot 33, which in turn induces a rotation of the lever arm 27.

The skate 24, solidly constrained to the lever arm 27, exerts a thrust on the first crown gear 13 such as to bring it to contact with the first pinion 18.

This brings the means for engagement 8' into the end-cycle position, reached when the wheel 46 is at the bottom of one of the linear tracts 44, 45 i.e. in opposite position with respect to the location of the central recess 43, as shown in figure 7.

If there is a correspondence between the cog of the first crown gear 13 and the gulley between cogs of the first pinion 18, the gears are immediately enmeshed.

If this is not the case, the elastic thrust of the means for engaging 10 prevents the return of the lever arm 27, causing contact between the first crown gear 13 and the first pinion 18 without however engaging the gears.

As soon as the driven shaft 2 receives drive from the power take-off there will be a relative rotation of the first input shaft 11 and consequently of the first crown gear 13 and, at the same time, an immediate enmeshing of the first crown gear 13 on the first pinion 18.

The functioning of the atomiser 1 provided with the overgear 7, having the second input shaft 11', of the means for engaging 8" and the double elastic means 10, is as follows.

The means for engaging 8" are in start-cycle position respectively when the body 52 is located at the halfway point between the pair of shoulders 53 and the internal gear 49 is connected to the first cogging 21 made on the increase in section 20, figure 8.

In this configuration, the second input shaft 11' rotates without transmitting motion to the first and second crown gears 13, 14, as these are mounted idle on the second input shaft 11'.

By performing a small rotation of the handle 34 a respective rotation of the pivot 33 is induced.

The pad 58, rotating eccentrically with respect to the axis of the pivot 33, transmits a translation to the body 52 thanks to the projection 59 - recess 57 coupling.

As it translates along the axis of the rod 50 the body 52 nears one of the pair of shoulders 53.

The translation of the body 52 leads at the same time to a compression if the elastic means interpositioned between the body 52 and the shoulder to which the body 52 has neared, and an extension of the elastic means 10 interpositioned between the body 52 and the shoulder from which the body 52 has distanced.

Re-establishment of equilibrium by the elastic means 10 leads to a translation of the fork 51, in the example the C-shaped arm, in an opposite direction with respect to the translation of the body 52.

The translation of the C-shaped arm 54 causes a corresponding translation of the internal gear 49 thanks to the slot 55 on the external periphery thereof.

This configuration leads to the means for engaging 8" reaching the end-cycle position, as illustrated in figure 9, which position is reached when the body 52 has returned to the intermediate position with respect to the pair of shoulders 53 and the internal gear 49 is at the same time constrained to the first cogging 21 made on the increase in section 20, and the first cogwheel 22 or the first cogging 21 and the second cogwheel 23.

If there is a correspondence between the cog of the internal gear 49 and the gulley between cogs of the first cogwheel 22, or the second cogwheel 23, according to the rotation direction of the handle, the gears are immediately enmeshed.

The enmeshing is obtained by the engagement of the internal gear 49 both on the first cogging 21, made on the first cogwheel 22, or on the second cogwheel.

In this configuration the first crown gear 13, or the second crown gear 14, rotates solidly constrained to the second input shaft 11', transmitting drive to the first pinion 18 or the second pinion 19, and consequently to the output shaft 17.

Otherwise the elastic thrust generated by the double elastic means prevents return of the C-shaped arm 54, causing contact between the internal gear 49 an the first or second cogwheel 22, 23, without causing engagement of gears.

As soon as the driven shaft 2 receives drive from the power take-off there will be a relative rotation of the second input shaft 11' and consequently of the internal gear 49, and an immediate enmeshing of the internal gear 49 on the first cogwheel 22 or the second cogwheel 23.

In all of the embodiments described, the device has the further advantage of being activated directly from the inside of the cockpit of the tractor via a Bowden cable setup which enables the handle to be shifted.

## Claims

1. An atomizer with facilitated **gear engagement**, comprising:
a driven shaft (2) powered by a motor or a power take-off;
a tank (3) containing a liquid substance for treatment of a cultivation;
a pump (4) operated by the driven shaft (2) for circulating the liquid
substance at pressure;
a plurality of nozzles (5) in hydraulic communication with the pump (4) for dispensing the liquid solution;
a turbine (6), contiguous to the plurality of nozzles (5) for enabling atomisation of the liquid solution as it exits the plurality of nozzles;
at least an overgear (7), having an input shaft (11), in mechanical transmission with the driven shaft (2), and an output shaft (17), in mechanical transmission with the turbine (6), and internally provided with a plurality of gears (9) for transmitting different speed ratios to the turbine, said plurality of gears (9) comprising a first crown (13) and a second crown (14), provided on said input shaft (11), and a first pinion (18) and a second pinion (19), provided on said output shaft (17);
**characterised in that** it comprises:
means for engaging (8, 8', 8") operating on the overgear (7) for enabling a pre-engagement of gears defined by axial contact of a gear with another gear, each gear belonging to the plurality of gears (9), said means for engaging (8,8',8") comprising:
a first group (24,48), connected to said gears (13,14,18,19) for moving said gears between a first position, in which there is no transmission between the input shaft (11) and the output shaft (17), and a second position, in which there is transmission between the input shaft (11) and the output shaft (17) through said first crown (13) engaging with said first pinion (18) or said second crown (14) engaging with said second pinion (19);
a second group (25,39,52,57,58,59), connected to said first group (24,48) for moving said first group (24,48) between a position, in which said gears (13,14,18,19) are in said first position, and another position,
in which said gears (13,14,18,19) are in said second position;
elastic means (10) acting on the means for engagement (8, 8', 8") for enabling an automatic engagement of gears defined by an enmeshing of a gear with a reciprocal gear, each gear belonging to the plurality of gears (9), said elastic means (10) interacting with said first group (24,48) and said second group (25,39,52,57,58,59) for pushing said first group (24,48) towards the position in which the gears (13,14,18,19) are in the second position.

2. The atomizer with facilitated coupling of claim 1, **characterised in that** the at least an overgear (7) comprises:
a first input shaft (11) receiving drive from the driven shaft (2) and exhibiting a splined surface (12);
a bush (16) which is axially slidable following action of the means for engagement (8, 8') on the splined surface (12), which bush (16) exhibits a first crown gear (13) and a second crown gear (14) which are contiguous and which afford a chamber (15) there-between;
an output shaft (17) in mechanical transmission with the turbine (6), which output shaft (17) exhibits a first pinion (18) and a second pinion (19) which can be connected, by action of the elastic means (10), respectively with the first crown gear (13) and the second crown gear (14).

3. The atomizer with facilitated coupling of claim 1, **characterised in that** the at least an overgear (7) comprises:
a second input shaft (11') receiving drive from the driven shaft (2) and exhibiting an increased section (20) on a periphery of which a first cogging (21) is made, enmeshed with an internal gear (49) exhibiting on an external periphery a slot (55) having a circular development;
a first crown gear (13) rotatingly idle on the second shaft (11') and solid in rotation with a first cogwheel (22) having an external diameter and step which are equal to an external diameter and step of the first cogging (21) and which first cogwheel (22) abuts against the increase of section (20);
a second crown gear (14) rotatingly idle on the second shaft (11') and solid in rotation with a second cogwheel (23) having an external diameter and step which are equal to an external diameter and step of the first cogging (21) and which second cogwheel (23) abuts against the increase of section (20);
an output shaft (17) in mechanical transmission with the turbine (6) and exhibiting a first pinion (18) and a second pinion (19) respectively connected to the first crown gear (13) and the second crown gear (14).

4. The atomizer with facilitated coupling of claim 2, **characterised in that** the means for engagement (8) are defined by the first group (24) interacting via a pivot (33) with the second group (25), the first group (24) having a rotary movement with respect to an axis of the pivot (33) and the second group (25) having a helical movement with respect to the axis of the pivot (33).

5. The atomizer with facilitated coupling of claim 4, **characterised in that** the first group (24), which operates internally of the at least an overgear (7), is defined by a lever arm (27) exhibiting at an end thereof a skate (26) which skate (26) terminates in the chamber (15).

6. The atomizer with facilitated coupling of claim 4, **characterised in that** the second group (25), operating externally of the at least an overgear (7), comprises:
a tumbler-shaped body (28) exhibiting on a lateral wall thereof a seating (30) from which a pair of slots (31) branches of, the pair of slots (31) having a helical development and being arranged specularly with respect to the seating (30);
an intermediate body (29) which is mobile in a helical direction internally of the tumbler-shaped body (28) and exhibits on a peripheral edge thereof a pin (32) which is able to translate following action of the elastic means (10) on one slot of the pair of slots (31), and also superiorly exhibits a tubular projection (37).

7. The atomizer with facilitated coupling of any one of claims 5 or 6, **characterised in that** the pivot (33), which terminates downstream of the second group (25) with a handle (34), exhibits a first portion (33a), immersed in the at least an overgear (7), which first portion (33a) is connected to the lever arm (27), opposing the skate (26), and a second portion (33b) which projects from the at least an overgear (7), which second portion (33b) is concentric to the tumbler-shaped body (28) and to the intermediate body (29) and which is connected to the intermediate body (29) via a pin (35) coupled with a slot (36) afforded on the pivot (33).

8. The atomizer with facilitated coupling of claim 7, **characterised in that** the elastic means (10), acting on the intermediate body (29) for generating a thrust along the axis of the pivot (33), are superiorly in striking contact on a fastening nut (38) screwed on the pivot (33), and are inferiorly in striking contact on a bottom of the tubular projection (37) of the intermediate body (29).

9. The atomizer with facilitated coupling of claim 2, **characterised in that** the means for engaging (8') are defined by the first group (24) interacting via a pivot (33) with the second group (39), the first group (24) having rotary motion with respect to the axis of the pivot (33) and the second group (39) having axial motion with respect to the axis of the pivot (33), in opposite direction to a tangential component of the rotary motion.

10. The atomizer with facilitated coupling of claim 9, **characterised in that** the first group (24), operating internally of the at least an overgear (7), is defined by a lever arm (27) exhibiting at an end thereof a skate (26) which terminates in the chamber (15).

11. The atomizer with facilitated coupling of claim 9, **characterised in that** the second group (39), operating externally of the at least an overgear (7), comprises:
a cam (40) exhibiting a rolling element (42) provided with a central recess (43) from which a first linear tract (44) and a second linear tract (45) branch out, in opposite directions; the second linear tract (45) being symmetrical to the first linear tract (44);
a small piston (41), axially mobile along a vertical axis (Y-Y) by action of the elastic menas (10), exhibiting at a first end (41a) thereof a wheel (46), striking on the rolling element (42) of the cam (40), and a second end (41 b) thereof an anchoring bracket (47) for connecting the piston (41) to the at least an overgear (7).

12. The atomizer with facilitated coupling of any one of claims 10 and 11, **characterised in that** the pivot (33), terminating downstream of the second group (39) with a handle (34), exhibits a first portion (33a) which is immersed in at least an overgear (7), which first portion (33a) is connected to the lever arm (27), opposite the skate (26), and a second portion (33b) which is solid in rotation with the cam (40).

13. The atomizer with facilitated coupling of claim 12, **characterised in that** the elastic means (10), which act on the wheel (46) for generating a thrust along the axis (Y-Y), superiorly strike the wheel (46) and internally strike against the bottom of the small piston (41).

14. The atomizer with facilitated coupling of claim 3, **characterised in that** the means for engaging (8") are defined by the second group (48) which interacts with the internal gear (49), activated via the pivot (33), the second group (48) moving axially with respect to an axis of the second input shaft (11').

15. The atomizer with facilitated coupling of claim 14, **characterised in that** the second group (48) comprises:
a rod (50) having an axis which is parallel to the axis of the second input shaft (11');
a fork (51) which exhibits a pair of shoulders (53), which fork (51) is anchored to the rod (50) from which an arm (54) inferiorly develops, which arm (54) terminates in a coupling with the slot (55) afforded on the internal gearing (49);
a body (52), located between the pair of shoulders (53) and slidable on the rod (50) in a through-hole (56) afforded in the rod (50), which body (52) exhibits a recess (57) oppositely located to a side facing the internal gear (49).

16. The atomizer with facilitated coupling of claim 14, **characterised in that** the pivot (33), which terminates externally of the at least an overgear (7) with a handle (34), exhibits a first portion (34) which is immersed in the at least an overgear (7) and terminating with a pad (58), which pad (58) is eccentric with respect to the axis of the pivot (33) and which pad (58) exhibits a projection (59).

17. The atomizer with facilitated coupling of claim 16, **characterised in that** the elastic means (10) are two in number and are symmetrical and wind about the rod (50), each of which elastic means (10) has a side which strikes on one of the pair of shoulders (53) and another side which strikes on a respective other side of the body (52).

18. The atomizer with facilitated coupling of any one of claim 16 or 17, **characterised in that** the projection (59) is coupled with the recess (57) in the body (52).

## Patentansprüche

1. Zerstäuber mit vereinfachter Zahngetriebeverbindung, umfassend:
eine angetriebene Welle (2), die über einen Motor oder eine Zapfwelle angetrieben wird;
einen Behälter (3), umfassend eine flüssige Substanz zur Behandlung einer Kultivierung;
eine Pumpe (4), die über die angetriebene Welle (2) betätigt wird, um die flüssige Substanz unter Druck zirkulieren zu lassen;
eine Vielzahl von Düsen (5), die in hydraulischer Kommunikation mit der Pumpe (4) stehen, um die flüssige Lösung zu verteilen;
eine Turbine (6), angrenzend an die Vielzahl von Düsen (5), um die Zerstäubung der flüssigen Substanz bei deren Austreten aus der Vielzahl von Düsen zu ermöglichen;
mindestens ein Übersetzungsgetriebe (7), aufweisend eine Antriebswelle (11) in mechanischer Übertragung mit der angetriebenen Welle (2) und eine Abtriebswelle (17) in mechanischer Übertragung mit der Turbine (6) und intern ausgestattet mit einer Vielzahl von Zahngetrieben (9) zum Übertragen unterschiedlicher Drehzahlverhältnisse auf die Turbine, wobei diese Vielzahl von Zahngetrieben (9) einen ersten Kranz (13) und einen zweiten Kranz (14), ausgebildet auf der Antriebswelle (11), und ein erstes Ritzel (18) und ein zweites Ritzel (19), ausgebildet auf der Abtriebswelle (17), umfassen;
**dadurch gekennzeichnet, dass** er umfasst:
Mittel zum Eingreifen (8, 8', 8"), die auf das Übersetzungsgetriebe (7) wirken, um ein Voreingreifen der Zahngetriebe, definiert durch den axialen Kontakt eines Zahngetriebes mit einem anderen Zahngetriebe, zu ermöglichen, wobei jedes Zahngetriebe zu der Vielzahl von Zahngetrieben (9) gehört, wobei die Mittel zum Eingreifen (8, 8', 8") umfassen:
eine erste Gruppe (24, 48), verbunden mit diesen Zahngetrieben (13, 14, 18, 19), um diese Zahngetriebe zwischen einer ersten Position, in der keine Übertragung zwischen der Antriebswelle (11) und der Abtriebswelle (17) stattfindet, und einer zweiten Position, in der eine Übertragung zwischen der Antriebswelle (11) und der Abtriebswelle (17) stattfindet, durch den ersten Kranz (13) zu bewegen, der mit dem ersten Ritzel (18) in Eingriff gelangt, oder durch den zweiten Kranz (14), der mit dem zweiten Ritzel (19) in Eingriff gelangt;
eine zweite Gruppe (25, 39, 52, 57, 58, 59), verbunden mit der ersten Gruppe (24, 48), um die erste Gruppe (24, 48) zwischen einer Position, in der sich die Zahngetriebe (13, 14, 18, 19) in der ersten Position befinden, und einer anderen Position, in der sich die Zahngetriebe (13, 14, 18, 19) in der zweiten Position befinden, zu bewegen;
elastische Mittel (10), die auf die Mittel zum Eingreifen (8, 8', 8") wirken, um ein automatisches Eingreifen der Zahngetriebe, definiert durch ein Eingreifen eines Zahngetriebes in ein gegenständiges Zahngetriebe, zu ermöglichen, wobei jedes Zahngetriebe der Vielzahl von Zahngetrieben (9) angehört, wobei die elastischen Mittel (10) mit der ersten Gruppe (24, 48) und der zweiten Gruppe (25, 39, 52, 57, 58, 59) zusammenwirken, um die erste Gruppe (24, 48) in die Position zu schieben, in der sich die Zahngetriebe (13, 14, 18, 19) in der zweiten Position befinden.

2. Zerstäuber mit vereinfachter Kopplung nach Anspruch 1, **dadurch gekennzeichnet, dass** das mindestens eine Übersetzungsgetriebe (7) umfasst:
eine erste Antriebswelle (11), die von der angetriebenen Welle (2) angetrieben wird und eine genutete Oberfläche (12) aufweist;
eine Buchse (16), die der Wirkung der Mittel zum Eingreifen (8, 8') folgend auf der genuteten Oberfläche (12) axial verschiebbar ist, wobei diese Buchse (16) einen ersten Zahnkranz (13) und einen zweiten Zahnkranz (14) aufweist, die angrenzend sind und dazwischen eine Kammer (15) ausbilden;
eine Abtriebswelle (17) in mechanischer Übertragung mit der Turbine (6), wobei diese Abtriebswelle (17) ein erstes Ritzel (18) und ein zweites Ritzel (19) aufweist, die durch die Wirkung der elastischen Mittel (10) jeweils mit dem ersten Zahnkranz (13) und dem zweiten Zahnkranz (14) verbunden werden können.

3. Zerstäuber mit vereinfachter Kopplung nach Anspruch 1, **dadurch gekennzeichnet, dass** das mindestens eine Übersetzungsgetriebe (7) umfasst:
eine zweite Antriebswelle (11'), die von der angetriebenen Welle (2) angetrieben wird und einen vergrößerten Querschnitt (20) auf einem Umfang aufweist, auf dem eine erste Verzahnung (21) stattfindet, im Eingriff mit einem internen Zahngetriebe (49), aufweisend auf einem externen Umfang eine Aussparung (55), besitzend eine kreisförmige Entwicklung;
einen ersten Zahnkranz (13), der sich freilaufend auf der zweiten Welle (11') dreht, fest verbunden in Rotation mit einem ersten Zahnrad (22), aufweisend einen Außendurchmesser und einen Abstand, die gleich einem Außendurchmesser und einem Abstand der ersten Verzahnung (21) sind, wobei das erste Zahnrad (22) gegen die Querschnittvergrößerung (20) anschlägt;
einen zweiten Zahnkranz (14), der sich freilaufend auf der zweiten Welle (11') dreht, fest verbunden in Rotation mit einem zweiten Zahnrad (23), aufweisend einen Außendurchmesser und einen Abstand, die gleich einem Außendurchmesser und einem Abstand der ersten Verzahnung (21) sind, wobei das zweite Zahnrad (23) gegen die Querschnittvergrößerung (20) anschlägt;
eine Abtriebswelle (17) in mechanischer Übertragung mit der Turbine (6) und aufweisend ein erstes Ritzel (18) und ein zweites Ritzel (19), die jeweils mit dem ersten Zahnkranz (13) und dem zweiten Zahnkranz (14) verbunden sind.

4. Zerstäuber mit vereinfachter Kopplung nach Anspruch 2, **dadurch gekennzeichnet, dass** die Mittel zum Eingreifen (8) durch die erste Gruppe (24) definiert sind, die mittels eines Drehzapfens (33) mit der zweiten Gruppe (25) zusammenwirkt, wobei die erste Gruppe (24) eine Drehbewegung zu einer Achse des Drehzapfens (33) und die zweite Gruppe (25) eine Schraubenbewegung zur Achse des Drehzapfens (33) aufweist.

5. Zerstäuber mit vereinfachter Kopplung nach Anspruch 4, **dadurch gekennzeichnet, dass** die erste Gruppe (24), die innerhalb des mindestens einen Übersetzungsgetriebes (7) arbeitet, durch einen Hebelarm (27) definiert ist, aufweisend an einem Ende ein Gleitstück (26), wobei das Gleitstück (26) in der Kammer (15) endet.

6. Zerstäuber mit vereinfachter Kopplung nach Anspruch 4, **dadurch gekennzeichnet, dass** die zweite Gruppe (25), die außerhalb des mindestens einen Übersetzungsgetriebes (7) arbeitet, umfasst:
einen becherförmigen Körper (28), aufweisend auf einer Seitenwand eine Aufnahme (30), aus der ein Paar Aussparungen (31) abzweigt, wobei das Paar Aussparungen (31) eine schraubenförmige Entwicklung aufweist und spiegelbildlich zur Aufnahme (30) angeordnet ist;
einen Zwischenkörper (29), der in einer schraubenförmigen Richtung innerhalb des becherförmigen Körpers (28) beweglich ist und an einer Umfangskante einen Zapfen (32) aufweist, der folgend der Wirkung der elastischen Mittel (10) auf einer Aussparung des Paars Aussparungen (31) verschiebbar ist und zudem an der Oberseite einen rohrförmigen Vorsprung (37) aufweist.

7. Zerstäuber mit vereinfachter Kopplung nach einem der Ansprüche 5 oder 6, **dadurch gekennzeichnet, dass** der Drehzapfen (33), der stromabwärts der zweiten Gruppe (25) mit einem Griff (34) endet, einen ersten Abschnitt (33a) aufweist, der in das mindestens eine Übersetzungsgetriebe (7) eingetaucht ist, wobei der erste Abschnitt (33a) mit dem Hebelarm (27), gegenläufig zum Gleitstück (26), verbunden ist, und einen zweiten Abschnitt (33b), der aus dem mindestens einen Übersetzungsgetriebe (7) hervortritt, wobei der zweite Abschnitt (33b) konzentrisch zum becherförmigen Körper (28) und zum Zwischenkörper (29) angeordnet und mit dem Zwischenkörper (29) mittels eines Zapfens (35) verbunden ist, gekoppelt mit einer Aussparung (36), die auf dem Drehzapfen (33) ausgebildet ist.

8. Zerstäuber mit vereinfachter Kopplung nach Anspruch 7, **dadurch gekennzeichnet, dass** die elastischen Mittel (10), die auf den Zwischenkörper (29) zum Erzeugen eines Schubs entlang der Achse des Drehzapfens (33) wirken, oberseitig auf eine Befestigungsmutter (38), die auf dem Drehzapfen (33) aufgeschraubt ist, auftreffen, und unterseitig auf eine Unterseite des rohrförmigen Vorsprungs (37) des Zwischenkörpers (29) auftreffen.

9. Zerstäuber mit vereinfachter Kopplung nach Anspruch 2, **dadurch gekennzeichnet, dass** die Mittel zum Eingreifen (8') durch die erste Gruppe (24) definiert sind, die mittels eines Drehzapfens (33) mit der zweiten Gruppe (39) zusammenwirkt, wobei die erste Gruppe (24) eine Drehbewegung zur Achse des Drehzapfens (33) und die zweite Gruppe (39) eine axiale Bewegung zur Achse des Drehzapfens (33) aufweist, in die entgegengesetzte Richtung zu einer tangenzialen Komponente der Drehbewegung.

10. Zerstäuber mit vereinfachter Kopplung nach Anspruch 9, **dadurch gekennzeichnet, dass** die erste Gruppe (24), die innerhalb des mindestens einen Übersetzungsgetriebes (7) arbeitet, durch einen Hebelarm (27) definiert ist, aufweisend an einem Ende ein Gleitstück (26), wobei das Gleitstück (26) in der Kammer (15) endet.

11. Zerstäuber mit vereinfachter Kopplung nach Anspruch 9, **dadurch gekennzeichnet, dass** die zweite Gruppe (39), die außerhalb des mindestens einen Übersetzungsgetriebes (7) arbeitet, umfasst:
einen Nocken (40), aufweisend einen Wälzkörper (42), versehen mit einer mittigen Vertiefung (43), aus der ein erstes lineares Teilstück (44) und ein zweites lineares Teilstück (45) in entgegengesetzten Richtungen abzweigen, wobei das zweite lineare Teilstück (45) symmetrisch zum ersten linearen Teilstück (44) angeordnet ist;
einen kleinen Kolben (41), axial beweglich entlang einer vertikalen Achse (Y-Y) durch die Wirkung der elastischen Mittel (10), aufweisend an einem ersten Ende (41a) ein Rad (46), das auf den Wälzkörper (42) des Nockens (40) auftrifft, und an einem zweiten Ende (41b) einen Verankerungsbügel (47) zum Verbinden des Kolbens (41) mit dem mindestens einen Übersetzungsgetriebe (7).

12. Zerstäuber mit vereinfachter Kopplung nach einem der Ansprüche 10 und 11, **dadurch gekennzeichnet, dass** der Drehzapfen (33), der stromabwärts der zweiten Gruppe (39) mit einem Griff (34) endet, einen ersten Abschnitt (33a) aufweist, der in mindestens ein Übersetzungsgetriebe (7) eingetaucht ist, wobei der erste Abschnitt (33a) mit dem Hebelarm (27), gegenläufig zum Gleitstück (26), verbunden ist, und einen zweiten Abschnitt (33b), der sich fest verbunden mit dem Nocken (40) dreht.

13. Zerstäuber mit vereinfachter Kopplung nach Anspruch 12, **dadurch gekennzeichnet, dass** die elastischen Mittel (10), die auf das Rad (46) wirken, um einen Schub entlang der Achse (Y-Y) zu erzeugen, oberseitig auf das Rad (46) auftreffen und intern auf die Unterseite des kleinen Kolbens (41) auftreffen.

14. Zerstäuber mit vereinfachter Kopplung nach Anspruch 3, **dadurch gekennzeichnet, dass** die Mittel zum Eingreifen (8") durch die zweite Gruppe (48) definiert sind, die mit dem internen Zahngetriebe (49) zusammenwirkt, aktiviert mittels des Drehzapfens (33), wobei sich die zweite Gruppe (48) axial zu einer Achse der zweiten Antriebswelle (11') bewegt.

15. Zerstäuber mit vereinfachter Kopplung nach Anspruch 14, **dadurch gekennzeichnet, dass** die zweite Gruppe (48) umfasst:
einen Stab (50), aufweisend eine Achse, die parallel zur Achse der zweiten Antriebswelle (11') angeordnet ist;
eine Gabel (51), die ein Paar Schultern (53) aufweist, wobei die Gabel (51) mit dem Stab (50) verankert ist, aus dem sich unterseitig ein Arm (54) entwickelt, wobei dieser Arm (54) in einer Kopplung mit der Aussparung (55), die auf dem internen Zahngetriebe (49) ausgebildet ist, endet;
einen Körper (52), angeordnet zwischen dem Paar Schultern (53) und verschiebbar auf dem Stab (50) in einem Durchgangsloch (56), ausgebildet im Stab (50), wobei der Körper (52) eine Vertiefung (57) aufweist, die gegenläufig zu einer Seite angeordnet ist, die dem internen Zahngetriebe (49) zugewandt ist.

16. Zerstäuber mit vereinfachter Kopplung nach Anspruch 14, **dadurch gekennzeichnet, dass** der Drehzapfen (33), der außerhalb des mindestens einen Übersetzungsgetriebes (7) mit einem Griff (34) endet, einen ersten Abschnitt (34) aufweist, der in das mindestens eine Übersetzungsgetriebe (7) eingetaucht ist und mit einem Block (58) endet, wobei der Block (58) exzentrisch zur Achse des Drehzapfens (33) angeordnet ist und wobei der Block (58) einen Vorsprung (59) aufweist.

17. Zerstäuber mit vereinfachter Kopplung nach Anspruch 16, **dadurch gekennzeichnet, dass** die elastischen Mittel (10) zwei sind und symmetrisch angeordnet um den Stab (50) gewunden sind, wobei jedes der elastischen Mittel (10) eine Seite aufweist, die auf eine Schulter des Paars Schultern (53) auftrifft, und eine andere Seite, die auf eine jeweilige andere Seite des Körpers (52) auftrifft.

18. Zerstäuber mit vereinfachter Kopplung nach Anspruch 16 oder 17, **dadurch gekennzeichnet, dass** der Vorsprung (59) mit der Vertiefung (57) im Körper (52) gekoppelt ist.

## Revendications

1. Pulvérisateur à embrayage de vitesse facilité, comprenant :
un arbre secondaire (2) alimenté par un moteur ou par une prise de force ;
une cuve (3) contenant une substance liquide destinée au traitement d'une culture ;
une pompe (4) actionnée par l'arbre secondaire (2) pour permettre à la substance liquide de circuler en pression ;
une pluralité de buses (5) en communication hydraulique avec la pompe (4) servant à distribuer la solution liquide ;
une turbine (6), contiguë à la pluralité de buses (5) pour permettre la pulvérisation de la solution liquide lorsque qu'elle sort de la pluralité de buses ;
au moins un multiplicateur de vitesse (7), ayant un arbre d'entrée (11) en transmission mécanique avec l'arbre secondaire (2), et un arbre de sortie (17) en transmission mécanique avec la turbine (6), et pourvu à l'intérieur d'une pluralité d'engrenages (9) permettant de transmettre différents rapports de transmission à la turbine, ladite pluralité d'engrenages (9) comprenant une première couronne (13) et une seconde couronne (14), prévues sur ledit arbre d'entrée (11), ainsi qu'un premier pignon (18) et un second pignon (19),
prévus sur ledit arbre de sortie (17) ;
**caractérisé en ce qu'**il comprend :
des moyens d'embrayage (8, 8', 8") agissant sur le multiplicateur de vitesse (7) pour permettre un pré-embrayage de vitesses défini par contact axial d'un engrenage avec un autre engrenage, chaque engrenage appartenant à la pluralité d'engrenages (9), lesdits moyens d'embrayage (8, 8', 8") comprenant :
un premier groupe (24, 48), relié auxdits engrenages (13, 14, 18, 19) pour déplacer lesdits engrenages entre une première position, dans laquelle il n'y a pas de transmission entre l'arbre d'entrée (11) et l'arbre de sortie (17) et une seconde position, dans laquelle il y a transmission entre l'arbre d'entrée (11) et l'arbre de sortie (17) à travers ladite première couronne (13) se mettant en prise avec ledit premier pignon (18) ou
ladite seconde couronne (14) se mettant en prise avec ledit second pignon (19) ;
un second groupe (25, 39, 52, 57, 58, 59), relié au dit premier groupe (24, 48) pour déplacer ledit premier groupe (24, 48) entre une position, dans laquelle lesdits engrenages (13, 14, 18, 19) se trouvent dans ladite première position, et une autre position, dans laquelle lesdits engrenages (13, 14, 18, 19) se trouvent dans ladite seconde position ;
des moyens élastiques (10) agissant sur les moyens d'embrayage (8, 8', 8") permettant un embrayage automatique de vitesses défini par un engrènement d'un engrenage avec un engrenage réciproque, chaque engrenage appartenant à la pluralité d'engrenages (9),
lesdits moyens élastiques (10) interagissant avec ledit premier groupe (24, 48) et ledit second groupe (25, 39, 52, 57, 58, 59) pour pousser ledit premier groupe (24, 48) vers la position dans laquelle les engrenages (13, 14, 18, 19) se trouvent dans la seconde position.

2. Pulvérisateur à couplage facilité selon la revendication 1, **caractérisé en ce que** l'au moins un multiplicateur de vitesse (7) comprend :
un premier arbre d'entrée (11) recevant l'entraînement de l'arbre secondaire (2) et présentant une surface cannelée (12) ;
une bague (16) pouvant coulisser axialement sous l'action des moyens d'embrayage (8, 8') sur la surface cannelée (12), ladite bague (16) présentant une première roue plate (13) et une seconde roue plate (14) qui sont contigües et qui réalisent une chambre (15) entre les deux ;
un arbre de sortie (17) en transmission mécanique avec la turbine (6), ledit arbre de sortie (17) présentant un premier pignon (18) et un second pignon (19) pouvant être reliés, sous l'action des moyens élastiques (10),
respectivement à la première roue plate (13) et à la seconde roue plate (14).

3. Pulvérisateur à couplage facilité selon la revendication 1, **caractérisé en ce que** l'au moins un multiplicateur de vitesse (7) comprend :
un second arbre d'entrée (11') recevant l'entraînement de l'arbre secondaire (2) et présentant une section élargie (20) sur une périphérie de laquelle est réalisée une première denture (21), engrenée avec un engrenage interne (49) présentant sur une périphérie externe une fente (55) ayant un développement circulaire ;
une première roue plate (13) en rotation libre sur le second arbre (11') et en rotation solidaire avec une première roue dentée (22) ayant un diamètre extérieur et un pas équivalents au diamètre extérieur et au pas de la première denture (21), ladite première roue dentée (22) étant placée en butée contre l'élargissement de section (20) ;
une seconde roue plate (14) en rotation libre sur le second arbre (11') et en rotation solidaire avec une seconde roue dentée (23) ayant un diamètre extérieur et un pas équivalents au diamètre extérieur et au pas de la première denture (21), ladite seconde roue dentée (23) étant placée en butée contre l'élargissement de section (20) ;
un arbre de sortie (17) en transmission mécanique avec la turbine (6) et présentant un premier pignon (18) et un second pignon (19) reliés respectivement à la première roue plate (13) et à la seconde roue plate (14).

4. Pulvérisateur à couplage facilité selon la revendication 2, **caractérisé en ce que** les moyens d'embrayage (8) sont définis par le premier groupe (24) interagissant par le biais d'un pivot (33) avec le second groupe (25), le premier groupe (24) ayant un mouvement de rotation par rapport à un axe du pivot (33) et le second groupe (25) ayant un mouvement hélicoïdal par rapport à l'axe du pivot (33).

5. Pulvérisateur à couplage facilité selon la revendication 4, **caractérisé en ce que** le premier groupe (24), qui agit à l'intérieur de l'au moins un multiplicateur de vitesse (7), est défini par un bras de levier (27) présentant à une extrémité un patin (26), ledit patin (26) se terminant dans la chambre (15).

6. Pulvérisateur à couplage facilité selon la revendication 4, **caractérisé en ce que** le second groupe (25), agissant à l'extérieur de l'au moins un multiplicateur de vitesse (7), comprend :
un corps en forme de cylindre (28) présentant sur une paroi latérale un siège (30) duquel une paire de fentes (31) bifurque, la paire de fentes (31) ayant un développement hélicoïdal et étant disposée de façon spéculaire par rapport au siège (30) ;
un corps intermédiaire (29), qui est mobile dans une direction hélicoïdale à l'intérieur du corps en forme de cylindre (28) et qui présente sur un bord périphérique une clavette (32) apte à se déplacer sous l'action des moyens élastiques (10) sur une fente de la paire de fentes (31), et qui présente aussi dans la partie supérieure une saillie tubulaire (37).

7. Pulvérisateur à couplage facilité selon l'une quelconque des revendications 5 ou 6, **caractérisé en ce que** le pivot (33), se terminant en aval du second groupe (25) par une poignée (34), présente une première partie (33a), immergée dans l'au moins un multiplicateur de vitesse (7), ladite première partie (33a) étant reliée au bras de levier (27), à l'opposée du patin (26), et une seconde partie (33b) qui dépasse de l'au moins un multiplicateur de vitesse (7), ladite seconde partie (33b) étant concentrique par rapport au corps en forme de cylindre (28) et au corps intermédiaire (29) et reliée au corps intermédiaire (29) par le biais d'une clavette (35) accouplée à une fente (36) réalisée sur le pivot (33).

8. Pulvérisateur à couplage facilité selon la revendication 7, **caractérisé en ce que** les moyens élastiques (10), agissant sur le corps intermédiaire (29) pour générer une poussée le long de l'axe du pivot (33), sont supérieurement en contact d'impact sur un écrou de fixation (38) vissé sur le pivot (33), et sont inférieurement en contact d'impact sur une partie inférieure de la saillie tubulaire (37) du corps intermédiaire (29).

9. Pulvérisateur à couplage facilité selon la revendication 2, **caractérisé en ce que** les moyens d'embrayage (8') sont définis par le premier groupe (24) interagissant par le biais d'un pivot (33) avec le second groupe (39), le premier groupe (24) ayant un mouvement de rotation par rapport à l'axe du pivot (33) et le second groupe (39) ayant un mouvement axial par rapport à l'axe du pivot (33), dans une direction opposée à une composante tangentielle du mouvement de rotation.

10. Pulvérisateur à couplage facilité selon la revendication 9, **caractérisé en ce que** le premier groupe (24), agissant à l'intérieur de l'au moins un multiplicateur de vitesse (7), est défini par un bras de levier (27) présentant à une extrémité un patin (26) se terminant dans la chambre (15).

11. Pulvérisateur à couplage facilité selon la revendication 9, **caractérisé en ce que** le second groupe (39), agissant à l'extérieur de l'au moins un multiplicateur de vitesse (7), comprend :
une came (40) présentant un élément roulant (42) pourvu d'un renfoncement central (43) duquel une première partie linéaire (44) et une seconde partie linéaire (45) bifurquent dans des directions opposées ; la seconde partie linéaire (45) étant symétrique à la première partie linéaire (44) ;
un petit piston (41), mobile axialement le long d'un axe vertical (Y-Y) sous l'action des moyens élastiques (10), présentant à une première extrémité (41a) une roue (46) frappant sur l'élément roulant (42) de la came (40), et à une seconde extrémité (41b) un support d'ancrage (47) afin de relier le piston (41) à l'au moins un multiplicateur de vitesse (7).

12. Pulvérisateur à couplage facilité selon l'une quelconque des revendications 10 et 11, **caractérisé en ce que** le pivot (33), se terminant en aval du second groupe (39) par une poignée (34), présente une première partie (33a) qui est immergée dans au moins un multiplicateur de vitesse (7), ladite première partie (33a) étant reliée au bras de levier (27), à l'opposé du patin (26), et une seconde partie (33b) étant solidaire en rotation avec la came (40).

13. Pulvérisateur à couplage facilité selon la revendication 12, **caractérisé en ce que** les moyens élastiques (10) qui agissent sur la roue (46) pour générer une poussée le long de l'axe (Y-Y), supérieurement frappent la roue (46) et intérieurement frappent contre la base du petit piston (41).

14. Pulvérisateur à couplage facilité selon la revendication 3, **caractérisé en ce que** les moyens d'embrayage (8") sont définis par le second groupe (48) qui interagit avec l'engrenage interne (49), activé par le biais du pivot (33), le second groupe (48) se déplaçant axialement par rapport à un axe du second arbre d'entrée (11').

15. Pulvérisateur à couplage facilité selon la revendication 14, **caractérisé en ce que** le second groupe (48) comprend :
une tige (50) ayant un axe qui est parallèle à l'axe du second arbre d'entrée (11') ;
une fourche (51), qui présente une paire d'épaulements (53), ladite fourche (51) étant ancrée à la tige (50) de laquelle un bras (54) se développe inférieurement, ledit bras (54) se terminant en s'accouplant à la fente (55) réalisée sur l'engrenage interne (49) ;
un corps (52) situé entre la paire d'épaulements (53) et pouvant coulisser sur la tige (50) dans un orifice de passage (56) réalisé dans la tige (50), ledit corps (52) présentant un renfoncement (57) situé à l'opposé d'un côté faisant face à l'engrenage interne (49).

16. Pulvérisateur à couplage facilité selon la revendication 14, **caractérisé en ce que** le pivot (33), qui se termine à l'extérieur de l'au moins un multiplicateur de vitesse (7) par une poignée (34), présente une première partie (34) qui est immergée dans l'au moins un multiplicateur de vitesse (7) et qui se termine par un tampon (58), ledit tampon (58) étant excentrique par rapport à l'axe du pivot (33) et ledit tampon (58) présentant une saillie (59).

17. Pulvérisateur à couplage facilité selon la revendication 16, **caractérisé en ce que** les moyens élastiques (10) sont au nombre de deux et sont symétriques et tournent autour de la tige (50), chacun desdits moyens élastiques (10) ayant un côté qui frappe sur une des paires d'épaulements (53) et l'autre côté qui frappe sur un autre côté correspondant du corps (52).

18. Pulvérisateur à couplage facilité selon l'une quelconque des revendications 16 ou 17, **caractérisé en ce que** la saillie (59) est accouplée au renfoncement (57) dans le corps (52).
